# EUROPÄISCHE PATENTANMELDUNG

(11) **EP 0 653 579 A1**
(43) Veröffentlichungstag der Anmeldung: **17.05.1995**
(21) Anmeldenummer: 94117705.7
(22) Anmeldetag: 10.11.1994
(51) Int. Cl.: F16F 15/136, F16F 15/139

(54) **Drehschwingungstilger für Kurbelwellen**

(30) Priorität: 16.11.1993 DE 9317520 U; 16.11.1993 DE 4339098; 28.05.1994 DE 4418742
(71) Anmelder: DIEHL GMBH & CO., D-90478 Nürnberg (DE); Bernd Froitzheim Unternehmensberatung, D-51429 Bergisch Gladbach (DE); WEGU Gummi- und Kunststoffwerke Walter Dräbing KG, D-34123 Kassel (DE)
(72) Erfinder: Hausmann, Hubert, D-53894 Mechernich-Kalenberg (DE); Pepping, Karl-Heinz, D-53937 Schleiden (DE); Haberland, Norbert, Dr., D-53881 Euskirchen (DE); Gebhardt, Günther, D-54589 Stadtkyll (DE); Dietz, Michael, D-34613 Schwalmstadt (DE)

(57) **Zusammenfassung**

Beim An- bzw. Abstellen eines Kolbenmotors treten bei bisherigen niederfrequent abgestimmten Drehschwingungstilgern (1) an Kurbelwellen akute Lebensdauerprobleme bei den aus einem Elastomer bestehenden Tilgerstegen (12) auf. Eine Überlastung der Tilgerstege (12) wird dadurch vermieden, daß die Tilgermasse (zweiter Schwungring 6) über eine Rutschkupplung (Reibpaarung 15) mit einer Tilgerstege (12) aufweisenden Gummifedereinrichtung (5) verbunden ist.

## Beschreibung

Die Erfindung bezieht sich auf einen Drehschwingungstilger für Kolbenmotoren nach dem Oberbegriff des Anspruches 1.

Ein Drehschwingungstilger für Kolbenmotoren, insbesondere für Kraftfahrzeugmotoren, ist aus der DE 40 25 848 A1 bekannt. Der Drehschwingungstilger besteht aus zwei Schwungringen, die über Gummifedereinrichtungen entweder direkt an einer Nabe oder hintereinandergeschaltet an einer Nabe sitzen. Die Nabe ist ihrerseits drehfest auf der Kurbelwelle des Motors befestigt. Wesentlich für diesen Drehschwingungstilger ist die unterschiedlich eingestellte Gummifedereinrichtung. Hierbei ist die den ersten Schwungring tragende Gummifedereinrichtung hart eingestellt, während die Gummifedereinrichtung für den zweiten Schwungring weich eingestellt ist, wobei der zweite Schwungring radial außerhalb des ersten Schwungringes angeordnet ist. Mit einem derartigen Drehschwingungstilger können gaskrafterregte und massenkrafterregte Störschwingungen getilgt werden. Die Gummifedereinrichtung des zweiten äußeren Schwungringes erlaubt eine drehwinkelbegrenzte Relativbewegung des äußeren Schwungringes gegenüber der Nabe bzw. gegenüber dem ersten Schwungring. Um eine saubere Führung des großen äußeren Schwungringes gewährleisten zu können, können Gleitbuchsen zwischen den vorgenannten Bauelementen vorgesehen sein. Winkelbeschleunigungen werden unmittelbar über die Gummifedereinrichtung auf den äußeren Schwungring übertragen, wobei die Gleitbuchse nur Stützfunktion ausübt. Aufgrund der genannten Drehmomentübertragung von der Nabe auf den äußeren Schwungring bzw. vom inneren Schwungring auf den äußeren Schwungring ist die dem äußeren Schwungring zugeordnete Gummifedereinrichtung maximal belastet und muß daher entsprechend ausgelegt sein. Daraus resultiert eine verhältnismäßig große Masse der Gummifedereinrichtung, um das Arbeitsvermögen erfüllen zu können und es resultieren daraus weiterhin große Bindungsflächen zwischen der Gummifedereinrichtung und den damit zu verbindenden Teilen des Drehschwingungstilgers. Eine derartige Konstruktion ist zwar in der Lage, die auftretenden Schwingungen einer Störfrequenz zu tilgen, es erscheint jedoch fraglich, ob der weich eingestellte Tilger (w = 20 - 150 Hz) die Beanspruchung beim An- und Abstellen des Motors dauerfest erträgt und es keine Geräusche gibt beim Anschlagen der Tilgermassen in ihren Anschlägen.

Aufgabe der Erfindung ist es, einen Drehschwingungstilger vorzuschlagen, der bei geringem konstruktiven Aufwand und bei geringem Raumbedarf in der Lage ist, niederfrequente Schwingungen von 15 Hz bis 100 Hz selektiv zu tilgen und zwar besonders die Störschwingungen im Leerlauf, die Leerlauf-Getrieberasseln verursachen.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Grundgedanke der Erfindung ist, daß die Tilgermasse bei "Übermomenten" durchrutscht und auf diese Weise das Gummifedersystem vor Überlastung geschützt wird. Das Durchrutschen oder der Schlupf tritt ab einem genau definierten Drehmoment ein.

Größere Trägheitsmomente werden durch den Schlupf auf das voreingestellte definierte Drehmoment begrenzt, d.h., die elastischen Tilgerstege werden maximal mit dem voreingestellten also zulässigen Drehmoment belastet.

Bisher hatten niederfrequent eingestellte Drehschwingungstilger, die die Drehmomentungleichförmigkeiten von Verbrennungsmotoren tilgen sollten, akute Lebensdauerprobleme bei Anbringung an die Kurbelwelle (Schwungscheibe) des Verbrennungsmotors.

Der Grund für dieses Verhalten liegt in den sehr hohen Ungleichförmigkeiten von Verbrennungsmotoren während des An- bzw. Abstellen des Motors.

Diese Ungleichförmigkeiten führen zu so hohen Beschleunigungen der Tilgermasse, daß die Tilgerstege nach kurzer Zeit abreißen.

Die einzelnen Komponenten des Drehschwingungstilgers haben folgende Funktionen:
1. Die Tilgermasse
   1.1 erzeugt aufgrund der Winkel-Beschleunigung an den Tilgerstegen ein Drehmoment und
   1.2 gewährleistet mit der Drehfederrate der Tilgerstege die Kennfrequenz des Drehschwingungstilgers.
2. Der Reibbelag
   2.1 bestimmt die Höhe des Reibbeiwertes tan und ist damit
   2.2 an der Größe des Losbrechmoments beteiligt.
3. Die Tellerfeder
   3.1 erzeugt die Kraft, mit der der zweite Schwungring auf den konischen Sitz des Reibbelages gedrückt wird.
   3.2 bestimmt das Losbrechmoment.
4. Die Tilgerstege bestimmen mit der Masse des zweiten Schwungringes zusammen die Kennfrequenz des Drehschwingungstilgers.

Die Trägheitsmasse wird über Coulombsche Reibung mit dem Gummifedersystem gekoppelt. Aufgrund der unterschiedlichen Reibungskräfte beim Haften und Gleiten kann das Reibsystem so ausgelegt werden, daß die Trägheitsmasse bei der Funktion als Tilger über Haftreibung direkt, also schlupffrei angekoppelt ist. Übersteigen die Trägheitskräfte der Schwungmasse beim An- und Abstellen des Motors die vorher "eingestellte" Haftreibung, so rutscht der zweite Schwungring durch.

Der zweite Schwungring ist an keinen relativen Verdrehwinkel gebunden.

Der zweite Schwungring zentriert sich über den konischen Sitz automatisch zum ersten Schwungring.

An sich ist ein Drehschwingungstilger durch seinen prinzipiellen Aufbau, nämlich Habe, Gummifedereinrichtung und Schwungring, sehr unwuchtgefährdet. Aufgrund der Gummifeder wachsen die Unwuchten mit steigender Drehzahl. Demzufolge ist ein festes, gleitfähiges Material so in die Konstruktion einzubinden, daß sich Anfangsunwuchten nicht drehzahlabhängig vergrößern. Erfindungsgemäß weist der erste Schwungring nach innen ausgeformte Stege auf, die mit einer Gleitfläche der Nabe eine enge Spielpassung bilden. Damit ist der unwuchtkritische erste Schwungring an der Nabe zentriert, so daß bei steigender Drehzahl eine eventuell vorhandene Unwucht konstant bleibt und dadurch die Unwucht des zweiten Schwungringes sich auch nicht vergrößert.

Der erfindungsgemäße Drehschwingungstilger weist eine kompakte Bauweise auf und ist daher platzsparend ausgebildet. Sein konstruktiver Aufbau ist sehr einfach und daher kostengünstig.

Der Drehschwingungstilger beseitigt die niederfrequenten und daher besonders unangenehmen Störschwingungen im Leerlauf des Motors, die sich im Getriebe als Getrieberasseln bemerkbar machen und eignet sich daher zur Beseitigung von störenden Drehschwingungen bei Kolbenmotoren, Gelenkwellen und Antriebssträngen jeder Art.

Ausführungsbeispiele der Erfindung sind in der Zeichnung dargestellt. Es zeigen:
- Figur 1: einen Drehschwingungstilger in einer Teilansicht,
- Figur 2: einen Querschnitt II-II nach Figur 1,
- Figur 3: einen Querschnitt III-III nach Figur 1,
- Figur 4 bis 6: weitere Drehschwingungstilger im Querschnitt,
- Figur 7: ein Winkelbeschleunigungs-/Zeitdiagramm zu dem Drehschwingungstilger nach Figur 1,
- Figur 8: eine vereinfachte Darstellung eines Drehschwingungstilgers an einer Schwungscheibe in einer Schnittdarstellung,
- Figur 9: eine Reibpaarung für den Drehschwingungstilger nach den Figuren 1, 8 und 10 und
- Figur 10, 11: einen weiteren Drehschwingungstilger in einer Teilansicht und im Schnitt XI-XI nach Figur 10.

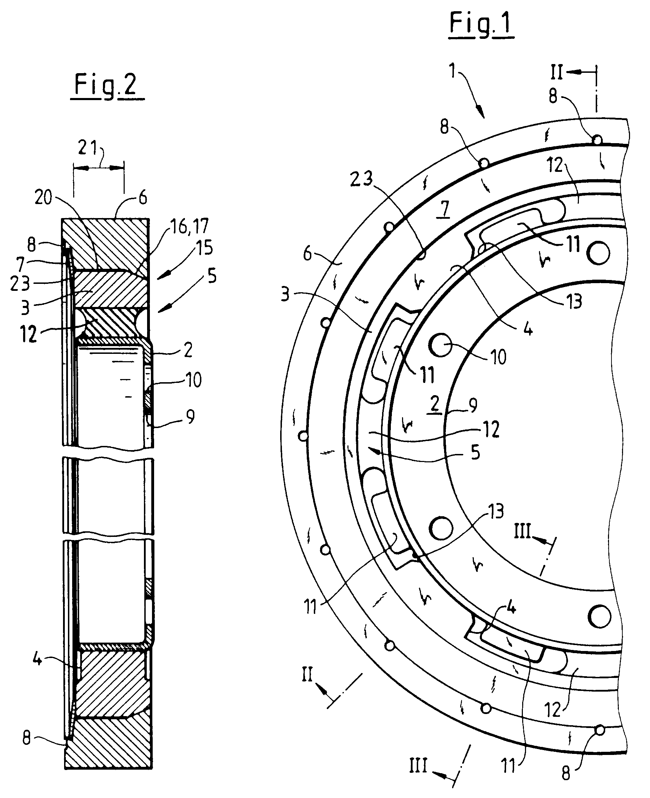

Ein Drehschwingungstilger 1 entsprechend den Figuren 1bis 3 besteht aus einer dünnwandigen, aus Blech oder Kunststoff geformten Nabe 2, einem als Reibring 3 ausgebildeten ersten Schwungring mit nach innen ausgebildeten, einstückigen Stegen 4, einer Gummifedereinrichtung 5 zwischen der Nabe 2 und dem ersten Schwungring bzw. Reibring 3, einem zweiten Schwungring 6, der die Tilgermasse darstellt und aus einer Tellerfeder 7.

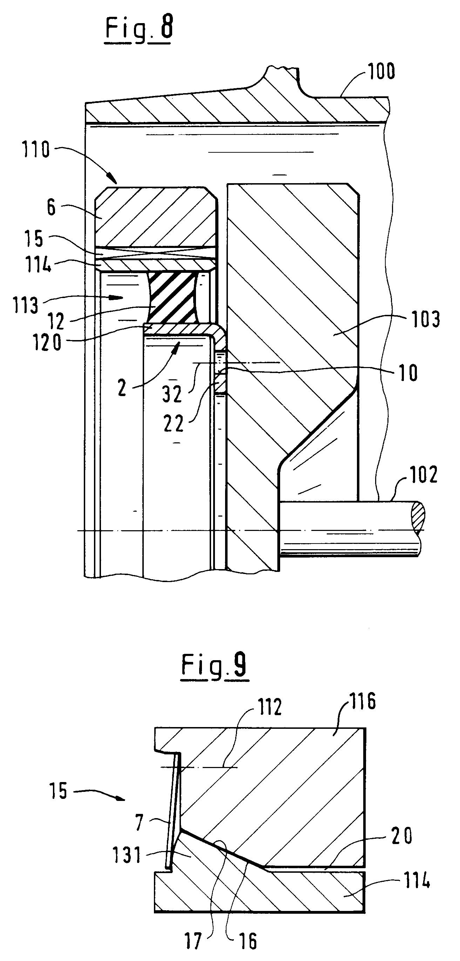

Die Nabe 2 weist eine zentrische Öffnung 9 und Bohrungen 10 zur mittel- oder unmittelbaren Montage an die Kurbelwelle 102 oder an die Schwungscheibe 103 (Figur 8) eines Kolbenmotors und anvulkanisierte Anschlagstege 11 aus Gummi auf.

Die Gummifedereinrichtung 5 besteht aus einem Elastomer und ist durch Tilgerstege 12 gebildet. Diese Tilgerstege 12 sind sowohl an die Nabe 2 als auch an den Reibring 3 anvulkanisiert.

Eine Reibpaarung 15 ist durch Konusflächen 16, 17 zwischen dem Reibring 3 und dem zweiten Schwungring 6 gebildet. Ein freier Ringspalt 20 erstreckt sich über einen axialen Bereich 21 zwischen dem Reibring 3 und dem zweiten Schwungring 6.

Die Tellerfeder 7 ist mittels Stauchpunkte 8 oder Schrauben 112 im zweiten Schwungring 6 verankert und sichert mit ihrem inneren Ringabschnitt 23 den zweiten Schwungring 6 in bezug auf den Reibring 3.

Beim An- und Abstellen eines nicht dargestellten Motors erfolgt zunächst eine sehr geringe Relativdrehung des Schwungringes 6 mit dem über Haftreibung gekuppelten Reibring 3 gegenüber der Nabe 2. Die Tilgerstege 12 werden dementsprechend verformt. Die Anschläge 4, 11 dienen nur als Sicherheitssystem, wenn beispielsweise die Reibkupplung klemmt bzw. das definierte Durchrutschmoment überschritten wird.

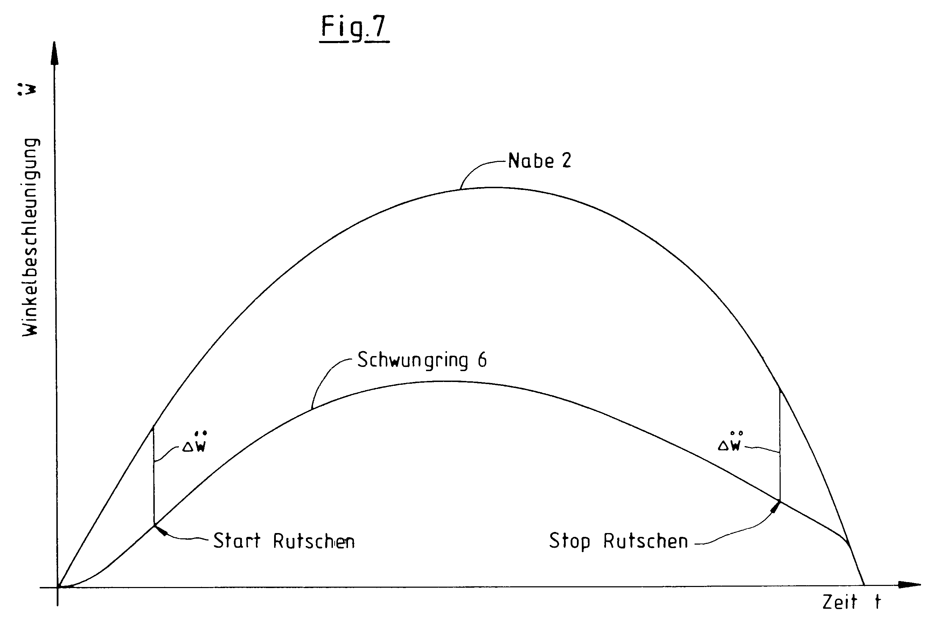

Aus Figur 7 sind die Winkelbeschleunigungen w über der Zeit t von Nabe 2 und Schwungrad 6 beim An- und Anstellen des Motors ersichtlich. Beim Starten des Motors wird die Nabe 2 stark beschleunigt. Durch das Federsystem 5 erfährt der Schwungring 6 eine verzögerte Beschleunigung. Aufgrund der Trägheit des Schwungringes 6 vergrößert sich die Differenz der Winkelbeschleunigungen w solange bis eine definierte Winkelbeschleunigungs-Differenz erzielt wird. Diese löst das vorab beschriebene Durchrutschen aus. Über die "Reibkupplung" wird der Schwungring 6 weiter beschleunigt. Das Durchrutschen endet, wenn die Differenz der Winkelbeschleunigungen den vorher definierten Betrag unterschreitet.

Jetzt liegt zwischen dem zweiten Schwungring 6 und dem Reibring 3 die Haftreibung vor, so daß beide Ringe, Reibring 3 und Schwungring 6, mit übereinstimmenden Winkelbeschleunigungen drehen. Der zweite Schwungring 6 ist dann über die Haftreibung direkt, also schlupffrei an den Reibring 3 angekoppelt, so daß jetzt ein wirksames Feder-Masse System in Form eines Tilgers vorliegt.

Beim Anstellen des Motors verlaufen die beschriebenen Vorgänge in umgekehrter Reihenfolge. Wesentlich für die Funktion des Drehschwingungstilgers 1 ist, daß die Tilgerstege 12 aufgrund der beschriebenen Anordnung nicht überlastet werden können.

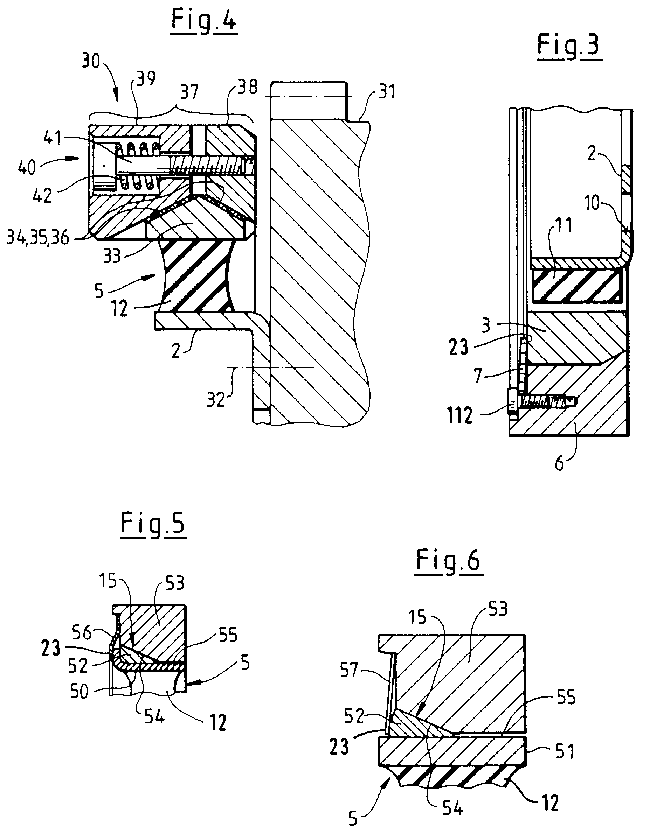

Nach Figur 4 ist ein Drehschwingungstilger 30 an einem Schwungrad 31 eines nicht weiter dargestellten Motors über angedeutete Befestigungen 32 montiert. Zwischen einem ersten Schwungring 33 und der Nabe 2 ist die Gummifedereinrichtung 5 vorgesehen. Der erste Schwungring 33 besitzt zwei Konusflächen 34 mit Reibbelägen 35. Auf diesen Reibbelägen 35 liegen zwei Gleitflächen 36 des zweiten, zweigeteilten Schwungringes 37 auf. Die beiden Teile 38, 39 des zweiten Schwungringes 37 sind durch ein Schraubenfedersystem 40 zusammengehalten. Mehrere Schrauben 41 bewirken über die Federn 42 eine einstellbare Vorspannung des zweiten Schwungringes 37 auf dem ersten Schwungring 33. Damit läßt sich das Losbrechmoment zwischen dem zweiten Schwungring 37 und dem ersten Schwungring 33 einstellen.

Nach den Figuren 5 und 6 besteht ein erster Schwungring 50 bzw. 51 aus einem dünnen Blechteil, wobei der erste Schwungring 50 bzw. 51 jeweils mit einem keilförmigen Reibring 52 fest verbunden ist. Ein zweiter Schwungring 53 liegt mit einer Konusfläche 54 auf dem Reibring 52 auf. In Axialrichtung besteht zwischen dem zweiten Schwungring 53 und der Nabe 50 bzw. 51 ein freier Ringspalt 55. Die Lagefixierung des zweiten Schwungringes 53 in bezug auf die Nabe 50 bzw. 51 erfolgt durch eine Tellerfeder 56 bzw. 57.

Nach Figur 8 sind in einem Motorgehäuse 100 auf einer Kurbelwelle 102 eine Schwungscheibe 103 mit einem Drehschwingungstilger 110 angeordnet.

Der Drehschwingungstilger 110 besteht aus der Nabe 2, einem aus Tilgerstegen 12 bestehenden Gummifedersystem 113, einem Trägerring 114, einer Rutschkupplung bzw. Reibpaarung 15 und aus einer Tilgermasse 6.

Die Tilgermasse 6 ist über die Rutschkupplung 15 auf dem Trägerring 114 lagefixiert angeordnet.

Die Tilgerstege 12 bestehen aus einem Elastomer und sind sowohl mit dem Trägerring 114 als auch mit einer zylindrischen Wand 120 der Nabe 2 durch Vulkanisation verbunden.

Der Drehschwingungstilger 110 ist über bekannte Befestigungsmittel, die mit der Bezugszahl 32 bezeichnet sind, mit der Schwungscheibe 103 verschraubt, wobei ein Boden 22 der Nabe 2 entsprechende Bohrungen 10 aufweist.

Die Reibpaarung 15 ist so eingestellt, daß die Tilgermasse bzw. Schwungring 6 mittels Schlupf ab einem genau definierten Drehmoment von dem Trägerring 114 und damit von den Tilgerstegen 12 abgekoppelt wird; das definierte Drehmoment verbleibt als Belastung auf den Tilgerstegen 12. Ein Versagen der Tilgerstege 12 durch Überbelastung beim An- bzw. Abstellen des Motors, d.h. zum Beginn und zum Ende der Rotation der Kurbelwelle 102 ist daher ausgeschlossen.

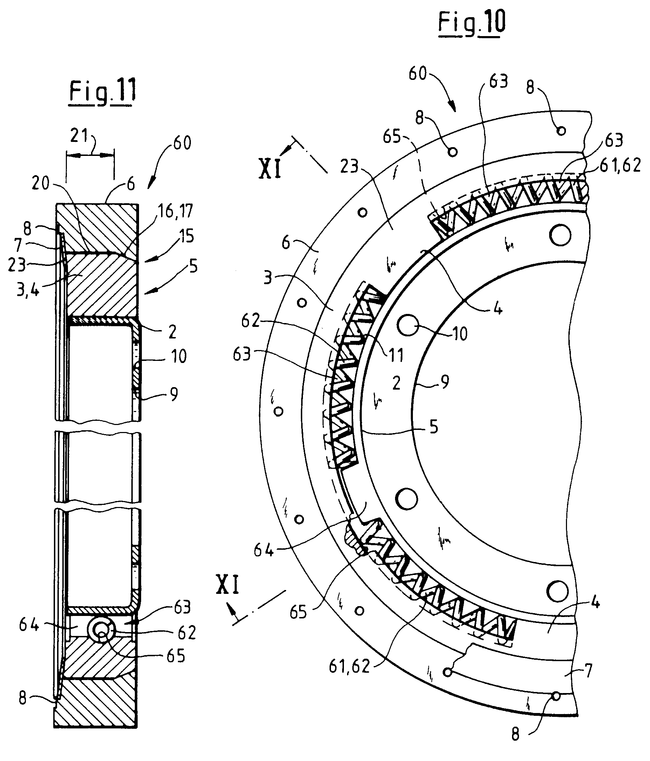

Nach Figur 9 ist der Trägerring 114 mit einem Reibkonus 131 zu einer Einheit verschmolzen. Dadurch liegt ein einstückiger kostengünstiger Reibring bzw. Trägerring 114 vor. Ein Schwungring mit einer innenliegenden Konusfläche 16 ist mit 116 bezeichnet.

Die Ausführungsbeispiele sind Prinzipdarstellungen. Neben der erfindungsgemäßen Rutschkupplung (Reibpaarung 15) ist für die Standfestigkeit der Gummifedereinrichtung 5 bzw. 113wesentlich, daß die Masse des Reibringes 3 bzw. ersten Schwungringes 33, 50, 51, 114 mit Reibringen 35 und 52 bzw. 131 möglichst klein gegenüber der Tilgermasse des zweiten Schwungringes 6, 37, 53 und 116 ist.

Nach den Figuren 10 und 11 ist ein Drehschwingungstilger 60 mit einem Stahlfedersystem 61 mit Spiralfedern 62 ausgestattet. - Dieses Stahlfedersystem 61 ersetzt gemäß Figur 1 die Gummifedereinrichtung 5 zwischen dem Reibring 3 und der Nabe 2. - Der Reibring 3 bildet mit der Nabe 2 Aufnahmeräume 63 für die Spiralfedern 62. Die etwas vorgespannten Spiralfedern 62 liegen stirnseitig zwischen den Stegen 4 und Anschlagstegen 64 sowie umfangsseitig zwischen der Nabe 2 und dem Reibring 3. Eine Nut 65 fixiert die Spiralfeder 61 formschlüssig gegen seitliches Verschieben.

Die Spiralfedern 62 stellen eine alternative Lösung zu den elastischen Tilgerstegen 12 nach den Figuren 1 bis 6 und 8 dar.

Die Drehschwingungstilger 1, 30, 60, 110 bestehen aus wenigen und einfachen Teilen. Sie sind kostengünstig und weisen ein geringes Bauvolumen auf. Insbesondere der Drehschwingungstilger 60 eignet sich zur Integration in Gesamtsysteme, wie in ein bekanntes, nicht dargestelltes Kupplungssystem.

Die Zusammenfassung ist Teil der Beschreibung.

## Patentansprüche

1. Drehschwingungstilger für Kolbenmotoren, Gelenkwellen, Antriebsstränge mit einer auf einer Welle drehfest montierbaren Nabe,
einem die Nabe konzentrisch umgebenden ersten Schwungring, der über eine in Umfangsrichtung wirksame Federeinrichtung mit der Außenfläche der Nabe verbunden ist,
sowie einem zweiten Schwungring, der mittelbar mit der Nabe verbunden ist,
dadurch gekennzeichnet,
daß der zweite Schwungring (6;37) frei drehbar gelagert ist,
und mit dem ersten Schwungring (3;33) mittel- oder unmittelbar eine Reibpaarung (15;35,36) bildet.

2. Drehschwingungstilger nach Anspruch 1,
dadurch gekennzeichnet,
daß der zweite Schwungring (6) mit dem ersten Schwungring (3) eine Reibpaarung (15;35,36) bildet.

3. Drehschwingungstilger nach Anspruch 2,
dadurch gekennzeichnet,
daß der erste Schwungring (3;37) den zweiten Schwungring (6;37) an seinem Umfang lagert und zentriert.

4. Drehschwingungstilger nach Anspruch 2,
dadurch gekennzeichnet,
daß der erste Schwungring (3) als Reibring (3) ausgebildet ist.

5. Drehschwingungstilger nach Anspruch 2,
dadurch gekennzeichnet,
daß mit dem ersten Schwungring (50;51) bzw. Trägerring (114) ein Reibring (52 bzw. 131) fest verbunden ist.

6. Drehschwingungstilger nach einem der Ansprüche 4 oder 5,
dadurch gekennzeichnet,
daß die Gleitebene zwischen dem Reibring (3) und dem zweiten Schwungring (6) in einem Winkel von 1 bis 89°, vorzugsweise 25° zur Drehachse des Drehschwingungstilgers (1;30;70) liegt.

7. Drehschwingungstilger nach einem der Ansprüche 4 bis 6,
dadurch gekennzeichnet,
daß eine Tellerfeder (7) an dem zweiten Schwungring (6) befestigt ist und mit einem Ringabschnitt (23) am Reibring (3) anliegt.

8. Drehschwingungstilger nach dem Anspruch 1 oder 2,
dadurch gekennzeichnet,
daß der erste Schwungring (3) nach innen ausgeformte Stege (4) aufweist, die mit einer Gleitfläche (13) der Nabe (2) eine enge Spielpassung bilden.

9. Drehschwingungstilger nach einem der Ansprüche 1, 2 und 8,
dadurch gekennzeichnet,
daß die Federeinrichtung als Gummifedereinrichtung (5,113) ausgebildet ist, wobei Tilgerstege (12) zu nabenseitigen Anschlägen (11) freie Abstände in Umfangsrichtung aufweisen und mit der Nabe (2) und dem ersten Schwungring (3) fest verbunden sind.

10. Drehschwingungstilger nach einem der Ansprüche 1, 2, 8 oder 9,
dadurch gekennzeichnet,
daß in einem Ringraum (13) zwischen dem ersten Schwungring (3) und dem zweiten Schwungring (6) die Tilgerstege (12), die Stege (4) und den Stegen (4) zugeordnete, mit der Nabe (2) fest verbundene Anschlagstege (11) aus Gummi vorgesehen sind,
wobei jeweils ein Steg (4) in die Lücke zwischen zwei Anschlagstegen (11) eingreift.

11. Drehschwingungstilger nach Anspruch 1,
dadurch gekennzeichnet,
daß die Nabe (2) eine geringe Masse aufweist und als Blech- oder Kunststoffteil ausgebildet ist, wobei eine zylindrische Wand (120) mit einem Gummifedersystem (113) verbunden ist.

12. Drehschwingungstilger nach Anspruch 1,
dadurch gekennzeichnet,
daß der zweite Schwungring (6;37;116) im Verhältnis zum ersten Schwungring (3;33;114) eine sehr große Masse aufweist.

13. Drehschwingungstilger nach den Ansprüchen 1 oder 2,
dadurch gekennzeichnet,
daß der erste Schwungring (33) einen dachkantförmigen Querschnitt mit zwei Konusflächen (34) aufweist, die Konusflächen (34) mit Reibbelägen (35) verbunden sind,
während der zweite Schwungring (37) zweigeteilt ist und die beiden Teile (38,39) durch ein Schrauben-Federsystem (40) zusammengehalten sind, wobei zwei Gleitflächen (36) des zweiten Schwungringes (37) auf den Reibbelägen (35) des ersten Schwungringes (33) aufliegen.

14. Drehschwingungstilger für Kurbelwellen nach Anspruch 1,
dadurch gekennzeichnet,
daß ein Bauteil (2) mit geringer Masse stirnseitig an einer Schwungscheibe (103) einer Kurbelwelle (102) befestigt ist, das Federsystem (113) das Bauteil (2) mit einem, eine geringe Masse aufweisenden Trägerring (114) verbindet, und die ringförmige Tilgermasse (6) mit dem Trägerring (114) als Rutschkupplung bzw. Reibpaarung (15) ausgebildet ist.

15. Drehschwingungstilger nach einem der Ansprüche 1 bis 3,
dadurch gekennzeichnet,
daß der Reibring (131) keilförmig ausgebildet ist und eine konische Reibfläche (17) aufweist.

16. Drehschwingungstilger nach Anspruch 1,
dadurch gekennzeichnet,
daß die Reibpaarung (15) eine konische Reibebene (16,17) besitzt,
wobei eine konische Reibfläche (16) der Tilgermasse bzw. Schwungring (6) auf einer entsprechenden konischen Reibfläche (17) des Trägerringes (114) unter Vorspannung einer Feder (7) aufliegt.

17. Drehschwingungstilger nach einem der vorhergehenden Ansprüche,
dadurch gekennzeichnet,
daß zwischen dem Schwungring (37) und dem Trägerring (3,51,114) ein freier Ringspalt (20,55) vorgesehen ist.

18. Dreschwingungstilger nach den Ansprüchen 1, 2, 8 und 14,
dadurch gekennzeichnet,
daß die Federeinrichtung als Stahlfedersystem (61) ausgebildet ist.

19. Drehschwingungstilger nach Anspruch 18,
dadurch gekennzeichnet,
daß zwischen dem Reibring (3) und der Nabe (2) in Aufnahmeräumen (63) Spiralfedern(62) gelagert sind, und die Spiralfedern (62) an den Stegen (4) des Reibringes (3) und an Anschlagstegen (64) der Nabe (2) abgestützt sind.

20. Drehschwingungstilger nach den Ansprüchen 18 oder 19,
dadurch gekennzeichnet,
daß die Spiralfedern (62) formschlüssig in Nuten (65) des Reibringes (3) gelagert sind.
